# EUROPEAN PATENT APPLICATION

(11) **EP 1 454 538 A1**
(43) Date of publication of application: **08.09.2004**
(21) Application number: 03077153.9
(22) Date of filing: 08.07.2003
(51) Int. Cl.: A23L 1/16

(54) **Flour composition containing non-wheat cereal components and noodles produced therefrom**

(30) Priority: 07.03.2003 CN 03120275
(71) Applicant: Standard Foods Corporation, Taipei City (TW)
(72) Inventor: Wang, Shing-Jung, Taipei City (TW)
(74) Representative: Thacker, Darran

(57) **Abstract**

A dry flour composition is provided to be mixed with added water for forming dough. The flour composition includes a wheat flour component, and a non-wheat cereal component. The amount of the non-wheat cereal component is at least 30% by weight based on the total weight of the dry flour composition in the absence of added water. The dry flour composition contains an additive, which is selected from a group consisting of wheat gluten protein and Curdlan, in an amount sufficient to provide a net-like structure for the dough.

## Description

The invention relates to a flour composition, more particularly to a flour composition containing a relatively large amount of non-wheat cereal components. This invention also relates to noodles produced from the flour composition.

Present commercially available cereal-added noodles usually contain cereal flours, such as oat flour, buckwheat flour, barley flour, pearl barley flour, rice flour, brownrice flour, and the like, which make it difficult to form a net-like structure when making dough from the cereal flours. Therefore, the cereals added in the present commercially available cereal-added noodles should be controlled to be in an amount less than 30% by weight. Otherwise, the cereal-added noodles having good mouthfeel and texture preferred by customers can hardly be produced. However, in view of health considerations, it is desired to take a sufficient amount of the cereals on a daily diet. Therefore, it is meaningful to take the cereals, especially oat, as one of the main diets.

Oat is a nutritious and calorie-proper food ingredient because it contains a great amount of water soluble fibers, β -glucan, proteins, vitamins, and mineral substance. It is also confirmed by the U. S. Food and Drug Administration that the oat-containing food products have the advantages of low contents of saturated fat and cholesterol. It is effective for reducing the risk of cardiovascular disease by taking the oat-containing food products containing more than 3 grams of β -glucan per day accompanied by taking food products with low contents of fat and cholesterol.

However, oat only contains 2 to 6 % by weight of β -glucan. Therefore, it is necessary to eat 50 to 150 grams of oat each day in order to take 3 grams of β -glucan per day. In other words, it is necessary to make oat as a main diet so as to take a sufficient amount of β-glucan each day. However, since oat cereals are chewy, it is difficult to take oat as the main diet, especially for elder people having cardiovascular disease.

Additionally, it is not possible to take a sufficient amount of β -glucan each day from the present commercially available oat-containing food products, such as cookies, flakes and the like, because such food products do not contain a sufficient amount of the oat ingredient.

Therefore, it is highly desired to produce noodles which are easy to chew, and which contain a sufficient amount of the aforesaid cereals such as oat and the like.

### The Production of the Conventional Noodles:

The conventional noodles contain wheat four as the main ingredient. The wheat flour usually includes about 9 to 14 % by weight of protein and 75 to 80 % by weight of starch as two main components for forming the structure of the dough.

Specifically, the protein contained in the wheat flour has about 80% of water insoluble gluten protein. The gluten protein is mainly composed of glutenin and gliadin. The glutenin is an alkaline soluble protein, and has intermolecular double sulfur bonds for providing extensibility for the dough. The gliadin is an alcohol soluble protein, and has intramolecular double bonds for providing elasticity for the dough. Additionally, the protein contained in the wheat flour has about 20% of protein which is water soluble and salt soluble, and which contains a great amount of thiol amino acid for providing a net-like structure during the production of the dough.

Additionally, the starch contained in the wheat flour includes about 25% of amylose and about 75% of amylopectin, or mainly includes two groups of starch in view of the starch granule size. When the wheat flour is used for producing the dough, the aleurone formed via the combination of the starch granule and the protein contained in the wheat flour is decomposed. The starch granules are dispersed and inlaid into the net-like structure so as to form a firm structure along with protein. The dough having the net-like structure is subsequently processed by sheeting, combining, rolling and cutting to form the noodles.

### Production of Pasta:

Pasta is made of Durum wheat as a main ingredient. The Durum wheat is ground and is subsequently extruded into the pasta. The Durum wheat and the general wheat are different from each other in chemical composition and physical properties. Although the Durum wheat contains a great amount of protein, the gluten thereof has considerable flexibility and thermosetting. Furthermore, the gelling property of the starch contained in the Durum wheat and the processing conditions for producing the pasta are different from those for the general noodles. Therefore, the color, taste, texture, and mouthfeel characteristics of the pasta are different from those of the general noodles even though the dough made of the wheat flour can be processed by the pasta machine into the noodles.

As described above, although the conventional noodles and the pasta are different in the species of the wheat flour and the processing conditions, the principles for making the noodles and the pasta are similar, i.e., by forming a net-like structure via the protein and the starch contained in the flour.

Although oat contains 12 to 15 % by weight of protein, it is devoid of a sufficient proportion of gluten protein for forming a net-like structure during the production of the dough. It is difficult to process the oat dough into the conventional noodles by the conventional process and apparatus for making noodles. Additionally, although the oat dough can be processed into the pasta by the pasta machine, the pasta made thereby is liable to break easily. The pasta made of the oat dough is also liable to become pasty during cooking. A flour composition containing a relatively large amount of non-wheat cereal components, such as oat and the like, and the noodle product produced therefrom have yet to be developed heretofore.

An object of the present invention is to provide a flour composition containing a relatively large amount of non-wheat cereal components so as to overcome the aforesaid shortcomings of the prior art.

Another object of this invention is to provide noodles made from the flour composition of the present invention.

According to one aspect, the present invention provides a dry flour composition to be mixed with added water for forming dough. The flour composition includes a wheat flour component and a non-wheat cereal component. The amount of the non-wheat cereal component is at least 30% by weight based on the total weight of the dry flour composition in the absence of added water. The dry flour composition contains an additive, which is selected from a group consisting of wheat gluten protein and Curdlan, in an amount sufficient to provide a net-like structure for the dough.

According to another aspect, the present invention provides noodles produced from the aforesaid dry flour composition.

The wheat flour component used in the present invention may include wheat gluten flour alone or a mixture of wheat gluten flour and wheat flour. The wheat flour component provides crude protein, which contains wheat gluten protein. The wheat flour component is added to the dry flour composition in an amount sufficient to provide at least 6% by weight, preferably 8-20% by weight, more preferably 10-18% by weight, of crude protein, based on the total weight of the dry flour composition. When the crude protein content of the wheat flour component is higher than 16% by weight, the noodle products obtained therefrom possess harder mouthfeel characteristics. When the crude protein content of the wheat flour component is lower than 8% by weight, the noodle products exhibit softer mouthfeel characteristics. In addition, when the crude protein content of the wheat flour component is less than 10% by weight, the noodles produced therefrom exhibit mouthfeel characteristics similar to that of a rice noodle having low chewability and elasticity. When the crude protein content of the wheat flour component is higher than 10% by weight, the resulting noodles exhibit improved elasticity and chewability.

Curdlan used as an additive in the dry flour composition of the present invention is a natural polysaccharide (*β*-1,3-glucan) produced by pure culture fermentation from the bacterium *Alcaligenes faecalis var. Myxogenes.* Curdlan can be added alone, or together with the gluten protein flour, to the dry flour composition as an ingredient for providing the net-like structure for the dough. Curdlan is usually used in food processing as a gelling agent. Curdlan produces a weak low-set gel if heated to 60°C and then cooled to below 40°C. However, if the temperature is higher than 80°C, Curdlan may produce a stronger thermo-irreversible gel. Since the noodles and the pasta are usually required to be cooked at a temperature higher than 80°C and subsequently cooled, the noodle and pasta may exhibit different characteristics at different temperatures. Therefore, Curdlan has not been suggested in the production of noodles.

It has found by the inventor in a research on additives used for adjusting the net-like structure of oat-containing dough that the amount of oat can be unexpectedly increased with the use of a proper amount of Curdlan in the oat-containing flour composition, and that the elasticity of the noodle products can be improved, and the stickness of the noodle product can be decreased as well. When Curdlan is added along with the wheat gluten protein, the amount of Curdlan is 0 to 1.5% by weight based on the total weight of the dry flour composition. When Curdlan is added alone without the use of the wheat gluten protein, the amount of Curdlan is 7.5 to 15% by weight based on the total weight of the dry flour composition.

Furthermore, since about 20% of the water soluble and salt soluble protein is contained in the wheat flour, salt can be added to the flour composition along with water for further enhancing the formation of the net-like structure of the dough. The amount of the salt is less than 2% by weight, preferably less than 1.5% by weight, more preferably 0.1 to 1.5% by weight, based on the total weight of the dry flour composition.

In addition to oat, other cereals, such as buckwheat, barley, rice, brownrice, Chinese yam, pearl barley, and the like, can also be used as the non-wheat cereal component in the inventive flour composition for producing the noodle product.

Other features and advantages of the present invention will become apparent in the following detailed description of the preferred embodiments.

### Examples:

### Materials used in the Examples:

1. Oat flour: supplied by grinding an Australian specie of oat into the flour;
2. Wheat gluten flour: containing more than 60% of gluten, and having 80% of crude protein as measured in a laboratory;
3. Wheat flour: containing 14% of crude protein;
4. Salt: more than 99.5% purity;
5. Curdlan: containing more than 98.6% of plant fiber, and supplied by Takeda Chemical Industries Ltd., Japan;

### Equipments:

1. Machine for making the conventional noodles:
   - Maximum productivity: 200 kg/hr;
   - Dried noodle: 1.1 mm in thickness and 1.8 mm in width;
   - Including mixing raw materials, dough sheeting, combing of two sheets, six-run rolling, cutting, and steaming units;
2. Pasta machine:
   - Maximum productivity: 30 kg/hr;
   - Dried pasta: 1.1 mm in thickness and 5.0 mm in width;
   - A laboratory type of pasta machine supplied by La Parmigiana Corp., Italy;
3. Drying apparatus:
   - an oven with temperature and humidity control.

### Analysis Method:

1. Sensory Analysis:
   The qualities of noodles were analyzed by five assessors after cooking in water for 5 minutes and draining off water in terms of turbidity of water, chewability, and elasticity. The sensory analysis result for each of the properties was classified in five scales.
   Turbidity of water: 1: not turbid; 2: slightly turbid; 3: medium turbid; 4: turbid; and 5: very turbid;
   Chewability: 1: not chewy; 2: slight chewiness; 3: medium chewiness; 4: noticeable chewiness; and 5: vert chewy;
   Elasticity: 1: not elastic; 2: slightly elastic; 3: medium elastic; 4: elastic; and 5: very elastic.
2. Measurement by Texture Analyzer:
   Measurements were conducted by a texture analyzer available from Stable Micro Systems Corp.

   50 grams of the noodle product were cooked in 500 ml of boiling water for 5 minutes, and were subsequently soaked in cold water, strained, and cooled to an ambient temperature. Five noodle strands were analyzed by the texture analyzer. A probe was used for detecting the firmness (Pasta Firmness RIG code HDP/PES) of the noodle strands. Forces required to compress the noodle strands were measured. An option was made by returning to the point of start. The measurement parameters were:
   - Pretest speed: 1.0 mm/s;
   - Test Speed: 0.5 mm/s;
   - Post Test Speed: 10.0 mm/s;
   - Distance: 90%.

   The texture, stickness and firmness of the samples of the noodle products were analyzed under the conditions of the constant speed and pressure. Stickness and firmness are represented by g/cm².
3. Turbidimeter Measurement:
   The turbidimeter is Model 2100P Portable Turbidimeter manufactured by HACH Corp.

   50 grams of the noodle product were cooked in 500 ml of boiling water for 5 minutes, and were subsequently strained to remove the water. The turbidity of the water was measured by the turbidimeter. The readings of the turbidimeter were shown in terms of NTU. The higher the reading, the higher is the turbidity.
   The results of the texture analyzer measurement and the turbidimeter measurement were compared with the result of the sensory judgement.

### Examples 1 to 14:

The dry flour composition of each of the examples contained a wheat flour component which includes wheat gluten flour or wheat gluten flour plus wheat flour. The examples included 8% or more than 8% of crude protein. After addition of water, the flour compositions were processed through dough sheeting, combining of two sheets, rolling, cutting, steaming and drying using the conventional machine for producing the noodles. The characteristics of the noodle products were analyzed with the use of the texture analyzer. The results are shown in Table 1.

**Table 1**

| Example No. | A mixture of wheat gluten flour and wheat flour | Crude protein % provided by the mixture of wheat gluten flour and wheat flour | Oat flour | Texture analyzer | |
|---|---|---|---|---|---|
| | Parts by weight | Parts by weight | Parts by weight | Firmness g/cm² | Stickness g/cm² |
| 1 | 10 | 8 | 90 | 1330 | 412 |
| 2 | 70 | 12 | 30 | 2034 | 449 |
| 3 | 60 | | 40 | 2053 | 421 |
| 4 | 50 | | 50 | 2054 | 429 |
| 5 | 40 | | 60 | 2011 | 429 |
| 6 | 30 | | 70 | 2036 | 437 |
| 7 | 20 | | 80 | 1952 | 421 |
| 8 | 15 | | 85 | 1945 | 434 |
| 9 | 70 | 16 | 30 | 2761 | 393 |
| 10 | 60 | | 40 | 2717 | 395 |
| 11 | 50 | | 50 | 2708 | 364 |
| 12 | 40 | | 60 | 2706 | 364 |
| 13 | 30 | | 70 | 2634 | 387 |
| 14 | 20 | | 80 | 2669 | 373 |

It is shown in Table 1 that the noodle products made in Example 1, which contains 90% of oat flour, has a firmness of 1330 g/cm², which is comparable to that of the present commercially available noodle products. In Example 1, 8% of crude protein is entirely provided by 10% of the wheat gluten flour based on the dry flour composition. It is shown in the other examples that with the same amount of crude protein, even if the amount of oat flour is increased to a limit, the firmness of the noodles can be at least 2000 g/cm².

### Examples 15 to 22:

The dry oat-containing flour compositions in the examples were prepared by blending 75 parts by weight of oat flour with 25 parts by weight of a mixture of wheat gluten flour and wheat flour. The ratios of wheat gluten flour and wheat flour were adjusted to provide the amounts of the crude protein as shown in Table 2. 1.5 wt% of salt based on the total weight of the dry flour composition was further added to the dry flour composition. The dry flour composition was then processed by dough sheeting, combining of two sheets, rolling, cutting, steaming and drying with the use of the conventional machine for producing the noodle products. The qualities of the noodle products were analyzed. The results are shown in Table 2.

**Table 2**

| Examples | | Sensory score | | | Texture analyzer measurement | | Turbidimeter Measurement |
|---|---|---|---|---|---|---|---|
| No. | Crude protein | Turbitity | Chewability | Elasticity | Firmness g/cm² | Stickness g/cm² | NTU |
| 15 | 6% | 5 | 1 | 1 | 1365 | 453 | 56.3 |
| 16 | 8% | 5 | 2 | 1 | 1673 | 433 | 50.2 |
| 17 | 10% | 5 | 3 | 2 | 2054 | 426 | 30.1 |
| 18 | 12% | 4 | 3 | 3 | 3124 | 412 | 34.1 |
| 19 | 14% | 3 | 3 | 3 | 3674 | 401 | 30.5 |
| 20 | 16% | 2 | 3 | 3 | 4122 | 393 | 31.2 |
| 21 | 18% | 2 | 4 | 4 | 4512 | 400 | 29.8 |
| 22 | 20% | 2 | 5 | 5 | 4965 | 397 | 28.5 |

### Examples 23 to 30:

Examples 23 to 30 are identical to Examples 15 to 22 except that Examples 23 to 30 were processed by the pasta machine into pasta. The results are shown in Table 3.

**Table 3**

| Examples | | Sensory score | | | Texture analyzer measurement | | Turbidimeter Measurement |
|---|---|---|---|---|---|---|---|
| No. | Crude protein | Turbidity | Chewability | Elasticity | Firmness g/cm² | Stickness g/cm² | NTU |
| 23 | 6% | 5 | 1 | 1 | 1344 | 304 | 63.8 |
| 24 | 8% | 5 | 1 | 1 | 1523 | 278 | 64.2 |
| 25 | 10% | 5 | 1 | 1 | 1634 | 269 | 63.5 |
| 26 | 12% | 4 | 1 | 1 | 1754 | 224 | 50.1 |
| 27 | 14% | 4 | 2 | 2 | 1869 | 223 | 48.2 |
| 28 | 16% | 4 | 2 | 2 | 2134 | 210 | 44.4 |
| 29 | 18% | 4 | 2 | 2 | 3223 | 205 | 46.7 |
| 30 | 20% | 4 | 2 | 2 | 3456 | 199 | 45.8 |

As shown in Tables 2 and 3, the dry oat-containing flour compositions of the examples were processed into the noodle products by rolling via the conventional machine for producing the noodles and by extruding via the pasta machine as well. The properties, such as chewability, elasticity, and firmness, are improved as the amount of the crude protein increased. This means that the net-like structure of the noodle products is reinforced. The stickness is lowered as the amount of the crude protein increased. This means that the tendency of forming the pasty substance upon cooking of the noodles from the starch at the outside of the net-like structure is lowered. This indicates enhancement in chewability.

The firmness and the stickness of the conventional noodle after cooking are 1500-3000 g/cm² and 150-250 g/cm², respectively. The firmness and the stickness of the conventional pasta after cooking are 2000-3500 g/cm² and 90-150 g/cm², respectively. As shown in Tables 1 to 3, when the flour compositions of this invention contain crude protein in an amount of at least 8 % by weight based on the total weight of the dry flour composition, the noodle products produced by rolling have the firmness comparable to that of the present commercially available noodle products, no matter whether the salt is added or not. When the flour composition of this invention contains more than 12 % by weight of the crude protein, the noodle products produced from the flour compositions added with salt therein have firmness higher than that of the present commercially available noodle products, and have stickness higher than that of the conventional pasta.

Additionally, as shown in Table 3, the noodle products produced by extruding the flour compositions containing 10-20 % by weight of crude protein via the pasta machine have the chewability, the elasticity, and the firmness preferred by customers. However, the mouthfeel thereof is not like that of pasta. Therefore, it is necessary to increase the amount of the crude protein or to use another ingredient, such as Durum wheat flour, to enhance the flexibility and the thermosetting when the flour compositions of this invention are used to produce the pasta by extruding via the pasta machine.

### Examples 31 to 35:

Examples 31 to 35 contain 80 % by weight of oat flour and 20 % by weight of wheat gluten flour. The amount of aqueous salt solution added to the flour compositions were varied. Each of the flour compositions was processed through mixing, sheeting, combining, rolling, cutting, steaming and drying with the use of the conventional machine for producing the noodles into the noodle products. The qualities of the noodle products were analyzed. The results are shown in Table 4.

**Table 4**

| Examples | | Sensory score | | | Texture analyzer measurement | | Turbidimeter Measurement |
|---|---|---|---|---|---|---|---|
| No. | Salt w/w% | Turbidity | Chewability | Elasticity | Firmness g/cm² | Stickness g/cm² | NTU |
| 31 | 0 | 2 | 3 | 3 | 3040 | 409 | 24.7 |
| 32 | 0.5 | 2 | 3 | 3 | 3478 | 397 | 25.5 |
| 33 | 1.0 | 2 | 3 | 3 | 3980 | 393 | 25.0 |
| 34 | 1.5 | 2 | 3 | 3 | 4023 | 387 | 30.5 |
| 35 | 2.0 | 2 | 3 | 3 | 4024 | 386 | 24.8 |

### Examples 36 to 40:

The flour compositions of Examples 36 to 40 are identical to Examples 31 to 35, except that the flour compositions of Examples 36 to 40 were processed by the pasta machine into pasta. The results are shown in Table 5.

**Table 5**

| Examples | | Sensory score | | | Texture analyzer measurement | | Turbidimeter Measurement |
|---|---|---|---|---|---|---|---|
| No. | Salt w/w% | Turbidity | Chewability | Elasticity | Firmness g/cm² | Stickness g/cm² | NTU |
| 36 | 0 | 4 | 2 | 2 | 2143 | 242 | 34.4 |
| 37 | 0.5 | 4 | 2 | 2 | 2156 | 232 | 32.5 |
| 38 | 1.0 | 4 | 2 | 2 | 2187 | 234 | 32.0 |
| 39 | 1.5 | 4 | 2 | 2 | 2167 | 222 | 31.2 |
| 40 | 2.0 | 4 | 2 | 2 | 2198 | 223 | 32.8 |

As shown in Table 4, the noodles produced by rolling may be affected by the added amounts of salt. In an amount of salt ranging from 0 to 1.5 %, the firmness is increased as the amount of the salt increased. The firmness of the noodles of Example 31, which was not added with salt, is 1/4 lower than that of the noodles of Example 34, which was added with 1.5 % of salt. However, if the added amount of salt is over 1.5 %, the firmness of the noodles is not increased further. It is evident that 1.5 % of salt is a sufficient added amount for effecting the salt soluble protein contained in the flour compositions. It is shown in Table 5 that the firmness of the pasta produced by extruding is not affected by adding the salt.

### Examples 41 to 45:

Each of the dry flour compositions used in the examples contained 80 % by weight of oat flour and 20 % by weight of wheat gluten flour. Additionally, 1.5 % (w/w) of salt and a varying amount of Curdlan were added in each of the flour compositions. Each of the flour composition was processed through mixing, sheeting, combining, rolling, cutting, steaming and drying with the use of the machine for producing the conventional noodles into the noodle products. The qualities of the noodle products are analyzed. The results are shown in Table 6.

**Table 6**

| Examples | | Sensory score | | | Texture analyzer measurement | | Turbidimeter Measurement |
|---|---|---|---|---|---|---|---|
| No. | Curdlan % | Turbidity | Chewability | Elasticity | Firmness g/cm² | Stickness g/cm² | NTU |
| 41 | 0 | 2 | 3 | 3 | 4049 | 373 | 30.4 |
| 42 | 0.5 | 2 | 3 | 3 | 4165 | 390 | 31.5 |
| 43 | 1.0 | 2 | 3 | 3 | 4480 | 464 | 32.1 |
| 44 | 1.5 | 2 | 3 | 3 | 4475 | 404 | 31.5 |
| 45 | 2.0 | 2 | 3 | 3 | 4473 | 489 | 32.4 |

### Examples 46 to 50:

The flour compositions of Examples 46 to 50 are identical to those of Examples 46 to 50, except that the flour compositions of Examples 46 to 50 were processed by the pasta machine into pasta. The results are shown in Table 7.

**Table 7**

| Examples | | Sensory score | | | Texture analyzer measurement | | Turbidimeter Measurement |
|---|---|---|---|---|---|---|---|
| No. | Curdlan % | Turbidity | Chewability | Elasticity | Firmness g/cm² | Stickness g/cm² | NTU |
| 46 | 0 | 4 | 2 | 2 | 2123 | 208 | 31.4 |
| 47 | 0.5 | 4 | 2 | 2 | 1943 | 219 | 31.6 |
| 48 | 1.0 | 4 | 2 | 2 | 1978 | 219 | 32.4 |
| 49 | 1.5 | 4 | 2 | 2 | 1978 | 215 | 32.5 |
| 50 | 2.0 | 4 | 2 | 2 | 1854 | 236 | 32.6 |

As shown in Table 6, the firmness of the food products produced by rolling is effectively increased by adding Curdlan while maintaining the sensory scales. That is to say, the net-like structure formed by gluten can be reinforced by adding Curdlan to the flour composition. However, when the added amount of Curdlan is over 1 %, the firmness of the noodle products is not increased further. Additionally, the addition of Curdlan has no effect on modifying the stickness of the noodle products. It is evident that the net-like structure formed by Curdlan is not like that formed by gluten protein, which contains fine starch granules of oat within the net-like structure. It is shown in Table 7 that the properties of the noodle products produced by extruding are not affected by adding Curdlan.

Furthermore, when Curdlan is used alone, without addition of wheat gluten flour and wheat flour, as the additive to provide the net-like structure of the dough, the added amount ranging from 7.5 to 15.0 % is appropriate for obtaining the desired properties. On the other hand, when 10% by weight of Curdlan and 10% by weight of wheat gluten flour were added respectively to 90% by weight of oat flour to prepare flour compositions, and when the flour compositions are processed by extruding into pasta, it is observed that the pasta produced by using 10 % by weight of Curdlan is firmer and stickier (470 g/cm² vs. 278 g/cm²) than that produced by using 10 % by weight of the wheat gluten flour. It was also found that when only Curdlan is used as the additive for providing the net-like structure of the dough, the dough is not suitable to be processed by rolling to form noodles, whether it is heated or not.

### Cooking Test for the Oat-Containing Noodle Products Produced by Rolling:

A dry flour composition containing 75 % of oat flour and 25 % of wheat gluten flour was used. 1.5 % of salt was further added to the flour composition. The noodle product was produced by rolling, and was substantially cooked with water for testing the cooking characteristics thereof. The results are shown in Table 8.

**Table 8**

| Cooking time | Texture analyzer measurement | |
|---|---|---|
| Minutes | Firmness g/cm² | Stickness g/cm² |
| 5.0 | 4484 | 417 |
| 7.5 | 4431 | 308 |
| 10.0 | 3954 | 239 |
| 12.5 | 3916 | 198 |
| 15.0 | 3851 | 197 |
| 20.0 | 3145 | 141 |
| 30.0 | 2960 | 108 |

It is shown in Table 8 that the noodle product after cooking for 30 minutes has a firmness of about 3000 g/cm², and exhibits a good mouthfeel property. The noodle product after cooking, washing and straining, has a mouthfeel property similar to that of the commercially available pasta.

### Other Cereals

The examples in Table 9 respectively contained 80 % by weight of the cereals. 20 % by weight of wheat gluten flour and 1.5 % of salt were added to each example. The noodle products were produced by rolling, and were tested by the texture analyzer. The results are shown in Table 9.

**Table 9**

| Examples | Texture analyzer measurement | |
|---|---|---|
| | Firmness g/cm² | Stickness g/cm² |
| Buckwheat | 2187 | 110 |
| Barley | 1688 | 146 |
| Rice | 1968 | 161 |
| Brownrice | 2772 | 217 |
| Chinese yam | 2865 | 204 |

It is shown in Table 9 that this invention can be used with other cereals to produce the noodle products containing a high amount of the cereals.

## Claims

1. A dry flour composition to be mixed with added water for forming dough, **characterized by**:
a wheat flour component, and a non-wheat cereal component, wherein the amount of said non-wheat cereal component, is at least 30% by weight based on the total weight of said dry flour composition, and wherein said dry flour composition contains an additive, which is selected from a group consisting of wheat gluten protein and Curdlan, in an amount sufficient to provide a net-like structure for the dough.

2. The dry flour composition as claimed in claim 1, **characterized in that** the amount of said non-wheat cereal component is at least 50% by weight of the total weight of said dry flour composition.

3. The dry flour composition as claimed in claim 1 or claim 2, **characterized in that** said additive is wheat gluten protein, said wheat flour component being composed of a mixture of wheat gluten flour and wheat flour, said wheat flour component containing crude protein which in turn contains wheat gluten protein.

4. The dry flour composition as claimed in claim 3, **characterized in that** the amount of said crude protein is at least 6% by weight based on the total weight of said dry flour composition.

5. The dry flour composition as claimed in claim 3 or claim 4, **characterized in that** the amount of said crude protein is at least 10% by weight based on the total weight of said dry flour composition.

6. The dry flour composition as claimed in claim 1, **characterized in that** said additive is wheat gluten protein, said wheat flour component including wheat gluten flour, and containing crude protein which in turn contains wheat gluten protein.

7. The dry flour composition as claimed in claim 6, **characterized in that** the amount of said wheat gluten flour is 10% by weight based on the total weight of said dry flour composition.

8. The dry flour composition as claimed in any preceding claim, **characterized in that** said non-wheat cereal component is selected from a group consisting of oak, buckwheat, barley, rice, brownrice, Chinese yam and pearl barley.

9. The dry flour composition as claimed in any preceding claim, **characterized in that** said non-wheat cereal component is oat.

10. The dry flour composition as claimed in claim 3, further **characterized by** Curdlan.

11. The dry flour composition as claimed in claim 10, **characterized in that** the amount of said Curdlan is 0 to 1.5% by weight based on the total weight of said dry flour composition.

12. The dry flour composition as claimed in claim 1, **characterized in that** said additive is Curdlan.

13. The dry flour composition as claimed in claim 12, **characterized in that** the amount of said Curdlan is 7.5 to 15% by weight based on the total weight of said dry flour composition.

14. The dry flour composition as claimed in any preceding claim, further **characterized by** salt.

15. The dry flour composition as claimed in claim 14, **characterized in that** the amount of said salt is 0.1 to 1.5% by weight based on the total weight of said dry flour composition.

16. A noodle product produced from a dry flour composition, **characterized in that** the said dry flour composition comprises:
a wheat flour component, and a non-wheat cereal component, wherein the amount of said non-wheat cereal component is at least 30% by weight based on the total weight of said dry flour composition in the absence of added water, and wherein said dry flour composition contains an additive, which is selected from a group consisting of wheat gluten protein and Curdlan, in an amount sufficient to provide a net-like structure for the dough.

17. The noodle product as claimed in claim 16, **characterized in that** said non-wheat cereal component is selected from a group consisting of oat, buckwheat, barley, rice, brownrice, Chinese yam and pearl barley.

18. The noodle product as claimed in claim 16 or claim 17 **characterized in that** said noodle product is produced by rolling.

19. The noodle product as claimed in any of claims 16 to 18 **characterized in that** said noodle product is produced by extruding.

20. The noodle product as claimed in any of claims 16 to 19 **characterized in that** said non-wheat cereal component is oat.
